(19) Europäisches Patentamt / European Patent Office / Office européen des brevets

(11) **EP 3 033 845 B1**

(12) **FASCICULE DE BREVET EUROPEEN**

(45) Date de publication et mention de la délivrance du brevet:
**04.10.2017 Bulletin 2017/40**

(21) Numéro de dépôt: **14759037.6**

(22) Date de dépôt: **01.08.2014**

(51) Int Cl.:
**H04J 11/00** *(2006.01)*     **H04B 7/06** *(2006.01)*
**H04L 5/00** *(2006.01)*

(86) Numéro de dépôt international:
**PCT/FR2014/052014**

(87) Numéro de publication internationale:
**WO 2015/022461 (19.02.2015 Gazette 2015/07)**

(54) **PROCEDE DE SIGNALISATION DESTINE A ETRE MIS EN OEUVRE PAR UN RESEAU DE TELECOMMUNICATION CELLULAIRE, STATION DE BASE ET TERMINAL CORRESPONDANT**

VERFAHREN ZUR SIGNALISIERUNG IN EINEM ZELLULAREN NETZWERK, BASISSTATION UND ENTSPRECHENDES ENDGERÄT

SIGNALISATION METHOD FOR A CELLULAR COMMUNICATION NETWORK, BASE STATION AND CORRESPONDING TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.08.2013 FR 1357957**

(43) Date de publication de la demande:
**22.06.2016 Bulletin 2016/25**

(73) Titulaire: **Orange**
**75015 Paris (FR)**

(72) Inventeurs:
• **HARDOUIN, Eric**
  **F-75015 Paris (FR)**
• **JARAMILLO RAMIREZ, Daniel**
  **F-75013 Paris (FR)**
• **KOUNTOURIS, Marios**
  **F-75013 Paris (FR)**

(56) Documents cités:
**EP-A2- 1 895 680**

• **ORANGE: "Views on network-assisted interference cancellation and suppression", 3GPP DRAFT; R1-131633, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 9 avril 2013 (2013-04-09), XP050697418, Extrait de l'Internet: URL:http://www.3gpp.org/ftp/tsg_ran/WG1_RL 1/TSGR1_72b/Docs/ [extrait le 2013-04-09]**
• **SAMSUNG: "Discussion on Support for MU-CSI", 3GPP DRAFT; R1-133088 DISCUSSION ON MU-CSI FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 août 2013 (2013-08-10), XP050716308, Extrait de l'Internet: URL:http://www.3gpp.org/ftp/tsg_ran/WG1_RL 1/TSGR1_74/Docs/ [extrait le 2013-08-10]**

- ORANGE: "NAICS: How to coordinate link adaptation for CWIC receivers", 3GPP DRAFT; R1-133721, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 12 August 2013 (2013-08-12), XP050716839, Retrieved from the Internet: URL:http://www.3gpp.org/ftp/tsg_ran/WG1_RL 1/TSGR1_74/Docs/ [retrieved on 2013-08-12]
- ORANGE: "NAICS: How to coordinate link adaptation for CWIC receivers", 3GPP DRAFT; R1-133721, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN

**Description**

<u>Domaine de l'invention</u>

La présente invention se rapporte au domaine des télécommunications. Au sein de ce domaine, l'invention se rapporte plus particulièrement aux communications dites numériques. Les communications numériques comprennent en particulier les communications sans fil. Le support de transmission des communications est couramment appelé canal de transmission ou de propagation en référence à un canal aérien.

L'invention concerne plus particulièrement la signalisation, dans un réseau de télécommunications cellulaire, de paramètres de configuration d'un terminal pour communiquer sur ce réseau.

L'invention a ainsi une application privilégiée, mais non limitative, dans le contexte des réseaux cellulaires de télécommunications mobiles LTE (Long Term Evolution) tels que définis par le 3GPP (Third Génération Partnership Project), et notamment en voie descendante, c'est-à-dire dans le sens de communication de la station de base (ou eNodeB) vers les terminaux mobiles (ou UE pour « User Equipment »).

<u>Art antérieur</u>

La capacité des réseaux cellulaires de télécommunications mobiles, et en particulier celle des réseaux LTE, détermine la quantité de flux de données qu'un système peut assurer vers les différents utilisateurs, elle est appelée "Sum-Rate" ou débit somme noté *SR.*

De façon connue, la capacité des réseaux cellulaires de télécommunications mobiles, et en particulier celle des réseaux LTE, est limitée par les interférences. Ces interférences peuvent être de différentes natures. Parmi les plus dommageables en terme de capacité du réseau cellulaire, on distingue notamment :

- l'interférence SU-MIMO (pour Single User - Multiple Input Multiple Output) liée à l'usage d'antennes multiples en émission et en réception, et qui correspond à l'interférence générée entre des flux de données MIMO alloués à un même terminal ;
- l'interférence MU-MIMO (pour Multiple User - Multiple Input Multiple Output) qui correspond à l'interférence générée entre des flux de données MIMO alloués à des terminaux différents ; et
- l'interférence intercellulaire, générée entre des signaux émis par des cellules différentes et à destination de terminaux différents qui réutilisent les mêmes ressources temps-fréquence.

L'invention se place dans le contexte d'une réduction des interférences intercellulaires et/ou des interférences MU-MIMO évaluées au niveau du réseau dans un but notamment d'atteindre de meilleures performances en termes de débit pour des utilisateurs qui peuvent être en bordure de cellule.

La réduction d'interférences intercellulaires peut être obtenue via l'utilisation de techniques de coopération entre cellules communément désignées par techniques CoMP (pour « Coordinated MultiPoint).

Pour un réseau LTE, ces techniques sont décrites plus en détail dans le document TR 36.819 intitulé « Coordinated Multi-Point operation for LTE physical layer aspects », Release 11, édité par le 3GPP.

Certaines de ces techniques visent à coordonner l'allocation de ressources et le précodage mis en oeuvre par les stations de base contrôlant des cellules voisines d'une cellule donnée, de façon à minimiser l'interférence créée sur cette cellule par ses cellules voisines.

Ainsi, [1] décrit comment un terminal peut faire des recommandations au réseau pour lui permettre de déterminer une allocation conjointe de paramètres de transmission à des cellules voisines de sa cellule serveuse de façon à maximiser la performance du réseau. La maximisation se fait en réduisant le nombre de flux transmis par les interféreurs. La simplicité de cette technique s'accompagne d'une utilisation sous optimale du spectre radio non satisfaisante compte tenu du fait que les terminaux sont des récepteurs de base i.e. des récepteurs linéaires traditionnels ou avancées qui n'ont pas de moyen d'annulation d'interférence ; ces récepteurs traitent donc l'interférence comme du bruit, et sont appelés *récepteurs IaN* (Interference as Noise) dans la suite de ce document. Ces récepteurs sont utilisés de façon à maximiser la capacité d'un lien point à point i.e. d'un lien unique.

Les récepteurs non linéaires tels que par exemple des récepteurs MMSE-SIC (pour Minimum Mean Square Error-Successive Interference Cancellation ou minimisation de l'erreur quadratique moyenne-annulation successive d'interférences) mettent en oeuvre des techniques d'annulation d'interférence qui rendent ces récepteurs bien plus performants que les récepteurs linéaires IaN en particulier pour atteindre une maximisation du débit somme du réseau dans un contexte de canaux à liens multiples i.e. avec plusieurs sources et/ou plusieurs récepteurs.

Pour les canaux à liens multiples en présence de récepteurs à annulation d'interférences, la maximisation du débit de chaque lien indépendamment des autres liens n'entraîne pas systématiquement la maximisation du débit total du réseau. En effet, la maximisation du débit d'un lien, indépendamment des autres liens, peut rendre l'annulation d'interférence impossible, ce qui peut conduire à une perte importante pour le débit somme (débit total) du réseau, comme il sera explicité dans la suite.

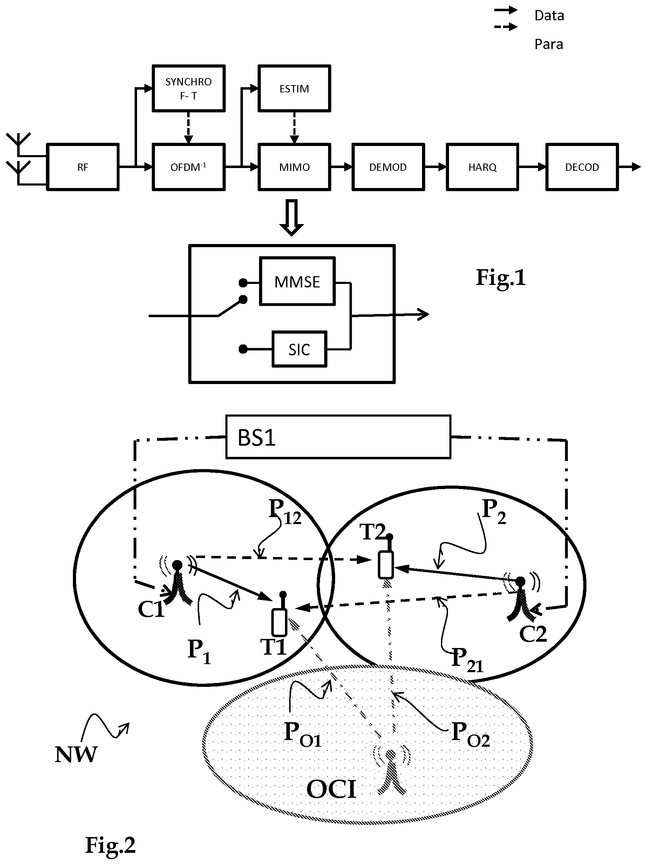

Le principe d'une chaîne de réception d'un récepteur MMSE-SIC est représenté à la figure 1.

Selon l'illustration, le récepteur MMSE-SIC comprend de façon connue un module de radio fréquence RF, un module de synchronisation (fréquence et temps) SYNCHRO F-T, un module de démodulation multi porteuse OFDM$^{-1}$, un module d'estimation de canal et de mesures radio ESTIM, un module d'égalisation et de traitement multi-antennes MIMO, un module de démodulation DEMOD, un module de combinaison de blocs de bits codés HARQ et un module de décodage de canal DECOD.

Le module d'égalisation et de traitement MIMO peut être représenté schématiquement sous la forme d'un module de traitement linéaire par exemple de type MMSE ou IRC et d'un module SIC en parallèle, un seul des deux modules étant activé. Dans la suite du document, dans le cas d'une absence d'activation d'annulation d'interférence, le récepteur est dit MMSE, dans le cas d'une activation de l'annulation d'interférence le récepteur est dit SIC. Ces modules permettent les traitements suivants dans un contexte de multiplexage spatial qui consiste à transmettre plusieurs flux ou couches spatiales sur les mêmes ressources temps-fréquence (appelées PRB dans un réseau LTE).

Si le traitement SIC n'est pas activé, le signal de sortie du module de démodulation multi porteuse subit un traitement de type MMSE qui permet d'estimer le flux de données provenant de la cellule serveuse tout en réduisant les interférences en les considérant comme du bruit, éventuellement coloré.

Si le traitement SIC est activé, selon une première passe, le signal de sortie du module de démodulation multi porteuse subit un traitement de type MMSE-SIC qui permet d'estimer le signal de la 1$^{ère}$ couche spatiale puis de le soustraire du signal de sortie du module de démodulation multi porteuse. Si l'estimation est sans erreur, le signal résultant est « nettoyé » de l'interférence créée par la première couche spatiale.

Le signal résultant subit alors un traitement MMSE qui permet d'estimer le signal correspondant à la 2$^e$ couche spatiale. Le processus peut se poursuivre pour soustraire le signal correspondant à la deuxième couche spatiale du signal résultant précédent afin d'estimer une troisième couche, et ainsi de suite. Cette annulation successive des interférences de chaque couche est appelée traitement SIC.

Plus précisément et, par souci de simplification en ne considérant le cas que de deux couches, ce qui correspond à un seul interféreur et des transmissions mono-couches (i.e. non SU-MIMO) de la part de la cellule servante et de la cellule interféreuse, les traitements MMSE-SIC permettent d'estimer le signal interférent (correspondant à une interférence de type MU-MIMO ou intercellulaire) en mettant en oeuvre par exemple une étape de décodage (de canal) du signal de l'interféreur correspondant. Le signal interférent reçu est ensuite reconstruit à partir de l'estimation des données du flux interférent, de l'estimation du canal de l'interféreur et de la connaissance des paramètres de transmission alloués à cet interféreur. Le signal interférent reconstruit est ensuite soustrait du signal reçu par le terminal. Le signal ainsi obtenu, qui est nettoyé de l'interférence si celle-ci a été parfaitement estimée, est alors utilisé pour détecter le signal utile destiné au terminal.

Plus généralement, une fois que la 2$^e$ couche est décodée correctement, le signal reconstruit correspondant peut être soustrait du signal pour démoduler une 3$^e$ couche selon le procédé décrit pour la 2$^e$ couche. Et ainsi de suite pour d'autres couches.

On distingue deux variantes du récepteur MMSE-SIC : le « Hard SIC » et le « Turbo SIC ».

Dans le cas du récepteur « Hard SIC », l'estimation du signal de chaque interféreur et sa soustraction du signal reçu sont faites en une seule fois.

Pour que l'estimation de l'interférence soit sans erreur, il faut donc que le décodage de canal s'effectue avec succès. Ce succès peut être vérifié par le récepteur à l'aide du contrôle de redondance cyclique (CRC, Cyclic Redundancy Check).

Dans le cas du Turbo SIC, le processus d'estimation des signaux interférents et du signal utile est itératif. A la première itération, le processus décrit ci-dessus est effectué, en utilisant un décodage de canal dit « souple ». Les données estimées (pour un signal interférent et le signal utile) en sortie du décodage ne sont alors plus sans erreur, mais probabilistes, la valeur de chaque donnée souple représentant la fiabilité de l'estimation de cette donnée. L'estimation d'un signal à chaque passe n'est alors plus parfaite, de sorte qu'une partie seulement de l'interférence est supprimée du signal reçu avant de détecter la couche suivante. A la seconde itération, le signal de chaque couche est à nouveau estimé à l'aide d'un décodage souple, à partir d'un signal reçu d'où ont été soustraites les interférences estimées à la couche précédente. Cette deuxième estimation de chaque couche est ainsi raffinée par rapport à celle effectuée à l'itération précédente. Plusieurs itérations sont possibles, jusqu'à ce que le signal utile soit correctement décodé.

Dans le contexte de l'invention, un terminal SIC comprend un récepteur paramétrable pour mettre en oeuvre un traitement de réception classique ou un traitement de réception avec annulation d'interférence.

Bien que la version actuelle (Release 11) du standard LTE Advanced ne spécifie pas les mécanismes permettant au récepteur de connaître tous les paramètres de transmission alloués à cet interféreur, ce qui est nécessaire afin de permettre le décodage de son signal, il existe des mécanismes dans l'état de l'art qui permettent au récepteur de connaître ces paramètres.

Toutefois, la mise en oeuvre au niveau du réseau d'une adaptation de lien dans le but de tirer parti des récepteurs à annulation d'interférence afin de réduire l'effet des interférences intercellulaires sur les performances du réseau reste très difficile.

On rappelle que l'adaptation de lien est la procédure qui détermine la manière dont les données d'un terminal sélectionné pour être servi sont encodées pour la transmission. Elle consiste à décider d'un schéma de modulation et codage (MCS, Modulation and Coding Scheme). Ce MCS détermine l'efficacité spectrale de la transmission vers ce terminal, et donc son débit (donné par l'efficacité spectrale multipliée par la largeur de bande de la transmission, elle-même déterminée par le nombre de PRB décidé par l'allocation de ressources). Ainsi, l'adaptation de lien détermine le débit du terminal. L'adaptation de lien est mise en oeuvre par l'entité responsable de l'allocation de ressources, appelée scheduler.

Afin de permettre au réseau d'effectuer l'adaptation de lien, chaque terminal remonte au réseau un indicateur du MCS maximum, et donc de l'efficacité spectrale maximum et du débit maximum dans une largeur de bande donnée, qu'il est capable de recevoir. Ce débit maximum dépend des conditions de réception du terminal : la puissance reçue de son point de transmission serveur et le niveau d'interférence. Dans la norme LTE, cet indicateur du MCS maximum est appelé CQI (Channel Quality Indicator). Il est typiquement calculé par le terminal à l'aide des signaux de références émis par son point de transmission serveur. Il faut remarquer qu'en raison du caractère dynamique de l'allocation de ressources, les interféreurs ne sont pas nécessairement les mêmes au moment où le terminal calcule un CQI et au moment où le réseau sert ce terminal.

Pour qu'un récepteur victime d'un interféreur servi par une cellule voisine puisse mettre en oeuvre efficacement un traitement SIC, il faut que le MCS du signal d'interférence soit suffisamment bas pour que ce récepteur puisse le décoder. Si par défaut ce n'est pas le cas, là cellule voisine doit réduire le MCS (donc le débit) alloué à l'interféreur avant que le récepteur victime active un traitement SIC, pour que ce dernier puisse effectivement décoder le signal d'interférence en vue de l'estimer. Mais cette réduction de débit alloué peut avoir un impact négatif sur le débit somme SR du réseau.

Le document "Views on network-assisted interference cancellation and suppression", 3GPP DRAFT; R1-131633, extrait de l'Internet: URL:http://www.3gpp.org/ftp/tsg_ran/WG1_RL1/TSGR1_72b/Docs/ décrit des terminaux d'un système lte ayant la possibilité de mettre en oeuvre une réduction d'interférences de type SIC. L'intérêt de sa mise en oeuvre dépend des niveaux de codage et de modulation du signal interférant.

Exposé de l'intention

L'invention propose un procédé de signalisation pour permettre notamment de réduire les interférences intercellulaires ou MU-MIMO évaluées au niveau du réseau dans un but notamment d'atteindre de meilleures performances en termes de débit pour des utilisateurs dont l'un est susceptible d'interférer un autre tout en améliorant un débit somme du réseau.

Le procédé de signalisation selon l'invention est destiné à être mis en oeuvre par un réseau de télécommunication cellulaire comprenant une station de base qui contrôle au moins un premier point de transmission qui sert un premier terminal avec récepteur à annulation d'interférence activable, le premier terminal étant susceptible d'être interféré par un signal dit interférent destiné à un deuxième terminal. Le procédé de signalisation comprend :

- une étape de remontée d'indicateurs depuis le premier terminal et le deuxième terminal au réseau comprenant pour un terminal un indicateur de débit maximal avec réception sans annulation d'interférence due au signal destiné à l'autre terminal et comprenant en outre pour le premier terminal un indicateur de débit maximal de réception avec annulation d'interférence
- une étape de détermination par le réseau de l'activation ou pas de l'annulation d'interférence par le premier terminal et des débits respectifs à allouer au premier terminal et au deuxième terminal en fonction des indicateurs remontés,
- une étape de notification par le réseau de l'activation ou pas de l'annulation d'interférence au premier terminal et des débits respectifs alloués au premier terminal et au deuxième terminal,
- une étape de signalisation du réseau au premier terminal du débit alloué au deuxième terminal.

Ainsi, le réseau comprend un ou plusieurs points de transmission qui servent les différents terminaux. Les deux terminaux peuvent être servis simultanément par un même point de transmission contrôlé par une même station de base équipée de plusieurs antennes. Cette configuration permet une transmission de type MU-MIMO (Multi User MIMO). Donc, même si le point de transmission sert simultanément les deux terminaux selon une technique MU-MIMO, le signal destiné à un des terminaux peut être un signal interférent pour l'autre terminal. L'interférence est de type intracellulaire MU-MIMO.

Lorsque les terminaux sont servis par des points de transmission différents, le signal destiné au deuxième terminal, c'est-à-dire le signal émis par le point de transmission qui le sert, est vu par le premier terminal comme un signal interférent. L'interférence est de type intercellulaire.

Le premier et s'il existe le deuxième point de transmission participent à une allocation coopérative de débit mise en oeuvre par le réseau.

Les autres points de transmission du réseau sont dits non coopératifs et les signaux qu'ils génèrent sont considérés par les deux terminaux comme du bruit.

Si le premier terminal est capable de mettre en oeuvre une annulation d'interférence en réception, par exemple de type SIC, alors l'invention distingue l'interférence due au signal destiné au deuxième terminal du reste des interférences dues aux autres terminaux (sous-entendu dues aux signaux destinés aux autres terminaux). Selon un premier mode de réalisation ces dernières sont considérées comme du bruit.

Le signal destiné au deuxième terminal qui interfère la réception du premier terminal correspond généralement à l'interféreur dominant parmi les différents signaux interférant la réception du premier terminal.

Les indicateurs permettent au réseau de déterminer les débits à allouer entre les points de transmission participant à la coopération.

Le choix des indicateurs remontés permet d'évaluer l'impact de la mise en oeuvre d'un récepteur à annulation d'interférence sur le débit somme du réseau. Ces indicateurs permettent d'évaluer le débit somme en l'absence de traitement SIC et le débit somme si un traitement SIC est activé pour le premier terminal.

Si ces indicateurs de débit correspondent à des CQI (Channel Quality Indicator) alors l'évaluation du débit somme est obtenue en déterminant les MCS associés aux CQI et en sommant les débits respectifs obtenus avec ces MCS pour les deux terminaux.

Le réseau détermine la configuration des terminaux qui procure une amélioration du débit somme et notifie les terminaux en conséquence.

Le procédé de signalisation permet ainsi d'interdire systématiquement une diminution du débit somme en contrôlant l'activation du traitement d'annulation d'interférence en fonction de l'impact de cette annulation d'interférence sur les indicateurs de débit. Le procédé de signalisation permet de maximiser les performances en termes de gain de débit vu du réseau en exploitant les possibilités d'annulation d'interférence de terminaux SIC. Le débit à allouer au deuxième terminal doit être le plus petit entre celui qu'il peut recevoir et celui correspondant à l'indicateur remonté par le premier terminal de débit maximal de réception du signal destiné à l'autre terminal. La maximisation des performances peut être obtenue en interdisant une allocation de débit pour le deuxième terminal qui soit inférieure à un certain seuil fixé par exemple en fonction de son indicateur remonté de débit maximal avec réception sans annulation d'interférence.

La coopération peut être étendue à plus de deux cellules, de manière générale à N cellules.

Selon un mode de réalisation, l'indicateur de débit maximal de réception du signal destiné au deuxième terminal est déterminé sans annulation d'interférence en réception. Ce type d'indicateur est plus particulièrement obtenu avec un récepteur de type Hard SIC.

Selon un mode de réalisation, l'indicateur de débit maximal de réception du signal destiné au deuxième terminal est déterminé avec annulation d'interférence en réception. Ce type d'indicateur est plus particulièrement adapté pour un récepteur de type Turbo SIC.

Selon un mode de réalisation, le deuxième terminal est servi par un deuxième point de transmission différent du premier. Selon ce mode, la remontée d'indicateurs vers le réseau comprend :

- une remontée des indicateurs d'un terminal vers son point de transmission serveur,
- une étape de transmission des indicateurs des points de transmission vers la station de base.

Selon ce mode, la station de base qui contrôle le point de transmission serveur du premier terminal peut déterminer si une annulation d'interférence doit être activée et peut déterminer les débits à allouer. Ce mode est particulièrement adapté lorsque la station de base héberge un scheduler commun aux deux points de transmission.

Selon un mode de réalisation, le deuxième terminal a un récepteur à annulation d'interférence activable. Selon ce mode :

- l'étape de remontée d'indicateurs comprend en outre pour le deuxième terminal un indicateur de débit maximal de réception avec annulation d'interférence due au signal destiné au premier terminal et un indicateur de débit maximal de réception du signal destiné au premier terminal,
- l'étape de détermination par le réseau comprend la détermination de l'activation de l'annulation d'interférence par un ou aucun des terminaux avec récepteur à annulation d'interférence activable,
- la notification par le réseau de l'activation ou pas de l'annulation d'interférence est faite aux terminaux avec récepteur à annulation d'interférence activable,
- l'étape de signalisation du réseau comprend en outre une signalisation au deuxième terminal du débit alloué au premier terminal.

L'invention concerne également un programme d'ordinateur. Selon l'invention, le programme d'ordinateur comporte des instructions pour l'exécution des étapes du procédé de signalisation lorsque ledit programme est exécuté par un ordinateur.

L'invention concerne également un support d'enregistrement lisible par un ordinateur sur lequel est enregistré un programme d'ordinateur comprenant des instructions pour l'exécution des étapes du procédé de signalisation.

L'invention concerne également une station de base d'un réseau de télécommunications cellulaire qui contrôle au moins un premier point de transmission qui sert un premier terminal avec récepteur à annulation d'interférence activable, le premier terminal étant susceptible d'être interféré par un signal destiné à un deuxième terminal. Selon l'invention, la station de base comprend :

- un module de réception d'indicateurs remontés depuis le premier terminal comprenant un indicateur de débit maximal avec réception sans annulation d'interférence due au deuxième terminal, un indicateur de débit maximal de réception avec annulation d'interférence due au deuxième terminal, un indicateur de débit maximal de réception du signal destiné au deuxième terminal,
- un module de notification au premier terminal de l'activation ou pas de l'annulation d'interférence et de notification du débit alloué en fonction des différents indicateurs,
- un module de signalisation au premier terminal du débit alloué au deuxième terminal.

L'invention concerne également un terminal avec récepteur à annulation d'interférence activable, servi par un premier point de transmission d'un réseau de télécommunications cellulaire, le point de transmission étant contrôlé par une station de base, ledit terminal étant susceptible d'être interféré par un signal dit interférent destiné à un deuxième terminal. Selon l'invention, le terminal comprend :

- un module pour remonter des indicateurs au réseau comprenant un indicateur de débit maximal avec réception sans annulation d'interférence, un indicateur de débit maximal de réception avec annulation d'interférence due au signal interférent, un indicateur de débit maximal de réception du signal interférent,
- un module de traitement de réception avec annulation d'interférence activable par un paramètre transmis par le réseau,
- un module de réception du débit alloué au terminal et déterminé par le réseau en fonction des indicateurs remontés,
- un module de réception d'une signalisation par le réseau d'un débit alloué au deuxième terminal.

L'invention concerne également un système d'un réseau de télécommunications cellulaire. Selon l'invention, le système comprend :

- une station de base contrôlant au moins un premier point de transmission du réseau de télécommunications cellulaire ;
- un premier terminal avec récepteur à annulation d'interférence activable servi par le premier point de transmission susceptible d'être interféré par un signal destiné à un deuxième terminal,

cette station de base comprenant :

- un module de réception d'indicateurs remontés depuis le premier terminal comprenant un indicateur de débit maximal avec réception sans annulation d'interférence due au deuxième terminal, un indicateur de débit maximal de réception avec annulation d'interférence due au deuxième terminal, un indicateur de débit maximal de réception du signal destiné au deuxième terminal,
- un module de notification au premier terminal de l'activation ou pas de l'annulation d'interférence et de notification du débit alloué en fonction des différents indicateurs,
- un module de signalisation au premier terminal du débit alloué au deuxième terminal,

le terminal comprenant :

- un module pour remonter des indicateurs au réseau comprenant un indicateur de débit maximal avec réception sans annulation d'interférence, un indicateur de débit maximal de réception avec annulation d'interférence due au signal interférent, un indicateur de débit maximal de réception du signal interférent,
- un module de traitement de réception avec annulation d'interférence activable par un paramètre transmis par le réseau,
- un module de réception du débit alloué au terminal et déterminé par le réseau en fonction des indicateurs remontés,
- un module de réception d'une signalisation par le réseau d'un débit alloué au deuxième terminal.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est un schéma d'un récepteur MMSE-SIC activable,
- la figure 2 est un schéma d'un réseau de télécommunication qui comprend au moins une station de base et deux points de transmission servant respectivement deux terminaux.

Description détaillée de l'invention

L'invention se place dans le contexte d'un réseau qui comprend au moins une station de base, un terminal et un point de transmission qui sert le terminal, le terminal étant susceptible d'être interféré par un signal destiné à un deuxième terminal. Le deuxième terminal est servi par un deuxième point d'accès qui génère le signal interférent. Le deuxième point d'accès est qualifié d'interféreur.

La description suivante est illustrée par la figure 2 qui, pour une question de clarté de représentation, représente deux points de transmission C1, C2 distincts qui servent respectivement les deux terminaux T1,T2. Cette figure n'a pas de caractère limitatif et sert uniquement à des fins d'illustration.

Un point de transmission désigne l'entité qui sert un terminal, les termes «point de transmission » sont équivalents à « émetteur ». A un point de transmission correspond une cellule. Dans un réseau conforme aux spécifications du 3GPP LTE Release 11, à une cellule peut correspondre plusieurs points de transmission.

Un terminal est servi par son point de transmission serveur c'est-à-dire qu'il a une communication établie avec ce point de transmission.

Les points de transmission considérés peuvent être colocalisées. Une telle situation intervient par exemple avec des points de transmission qui contrôlent des secteurs différents créés à partir d'un même site radio. Dans ce cas, qui est fréquent, chaque point de transmission crée une cellule à l'aide d'antennes ayant une ouverture de 120°.

Les points de transmission considérés peuvent être localisés sur des sites radio distants et contrôlées par une même unité de traitement qui peut être appelée station de base.

Lorsque le signal interférent considéré pour le terminal T1 est de type MU-MIMO, le deuxième point de transmission se confond avec le premier point de transmission, les deux terminaux étant servis par le même point de transmission.

Au moins un des terminaux T1, T2 considérés est de type récepteur non linéaire avec annulation d'interférence par exemple de type SIC (Hard SIC ou Turbo SIC). Ce type de récepteur est configurable et en particulier il est capable de mettre en oeuvre un traitement de réception avec annulation ou pas d'interférence.

Les points de transmission considérés forment un ensemble de coopération au sein duquel le réseau détermine les terminaux qui peuvent être configurés avec une activation d'une annulation d'interférence conduisant à une amélioration du débit somme.

Le réseau récupère des indicateurs sur le débit pouvant être obtenu par un terminal attaché à un point de transmission en fonction du traitement effectué par son récepteur.

Selon le principe général de l'invention, ces indicateurs correspondent à des CQI calculés par le terminal sous différentes hypothèses de point de transmission serveur et de récepteur utilisé. Ces indicateurs sont au nombre de trois :

- $CQI_i^{i,IaN}$ traduit le débit (ou de manière équivalente, MCS) maximum que le terminal Ti (i=1 ou 2) peut recevoir de son point de transmission serveur (le point de transmission i) sans annulation d'interférence, par exemple en mettant en oeuvre un récepteur linéaire IRC ou MMSE ;

- $CQI_i^{i,SIC}$ traduit le débit (ou de manière équivalente, MCS) maximum que le terminal Ti peut recevoir de son point de transmission serveur (le point de transmission i) avec annulation d'interférence ;

- $CQI_i^{j,Agr}$ traduit le débit (ou de manière équivalente, MCS) maximum que terminal Ti peut recevoir de son interféreur dominant (ici le point de transmission j) à l'aide du récepteur utilisé pour estimer le signal interférent (par exemple un récepteur IRC dans le cas du Hard SIC).

La mise en oeuvre d'un traitement SIC par le terminal Ti impose une contrainte sur le MCS utilisé par le point de transmission interféreur. Cette contrainte vient du fait que le récepteur Ti mettant en oeuvre le traitement SIC doit être capable de décoder le signal d'interférence, ce qui impose que le MCS utilisé par le point de transmission interféreur soit inférieur ou égal au MCS correspondant à $CQI_i^{j,Agr}$. Dit autrement, pour que le terminal Ti puisse mettre en oeuvre un traitement SIC pour annuler l'interférence associée au point de transmission interféreur, le MCS utilisé simultanément par ce point de transmission interféreur pour servir le terminal Tj ne doit pas dépasser un seuil égal au MCS correspondant à $CQI_i^{j,Agr}$.

En outre, le MCS du terminal Tj doit être inférieur ou égal au MCS maximum qu'il peut recevoir de son point de transmission serveur j. Ce MCS maximum atteignable est indiqué au réseau par un CQI, par exemple $CQI_j^{j,IaN}$ si l'on suppose que le terminal Tj ne dispose pas d'un récepteur SIC.

Le MCS maximum que peut recevoir le terminal Tj afin de garantir que le terminal Ti puisse mettre en oeuvre une annulation du signal destiné au terminal Tj est donc donné par

$$MCS_j = \min\left(MCS\left[CQI_i^{j,Agr}\right], MCS\left[CQI_j^{j,IaN}\right]\right)$$

Dans cette équation, la notation $MCS\,[x]$ signifie « le MCS correspondant au CQI x». Ce MCS peut par exemple être celui qui fournit la même efficacité spectrale que celle associée au CQI x. Dans un autre exemple de mise en oeuvre, il peut être le MCS qui fournit l'efficacité spectrale la plus proche d'une version filtrée des efficacités spectrales associées à des remontées successives du CQI x. Ce filtrage peut par exemple réaliser une moyenne des efficacités spectrales du CQI x sur plusieurs remontées successives du CQI (correspondant à des instants différents) sur une fenêtre de temps donnée. Dans encore un autre exemple de mise en oeuvre, ce MCS peut être celui qui fournit l'efficacité spectrale associée à une version corrigée du CQI x. Cette version corrigée peut être par exemple le CQI immédiatement supérieur si le réseau a déterminé que le terminal remonte systématiquement une valeur pessimiste de ce CQI, ou alternativement le CQI immédiatement inférieur si le réseau a déterminé que le terminal remonte systématiquement une valeur optimiste de ce CQI.

Si le MCS maximum pour le terminal interférent Tj servi par le point de transmission j ( $MCS\left[CQI_j^{j,IaN}\right]$ ) est inférieur ou égal à $MCS\left[CQI_i^{j,Agr}\right]$, alors le réseau peut allouer ce MCS maximum au terminal Tj. Le terminal Ti peut alors décoder avec succès le signal transmis pour le terminal Tj et mettre en oeuvre un traitement d'annulation d'interférence sans impact sur la performance du terminal Tj.

En revanche, si le MCS maximum atteignable par un terminal interférent Tj servi par la cellule j ( $MCS\left[CQI_j^{j,IaN}\right]$ ) est supérieur à $MCS\left[CQI_i^{j,Agr}\right]$, le réseau doit allouer au terminal Tj un MCS inférieur à ce MCS maximum afin de garantir que le terminal Ti puisse décoder avec succès le signal transmis pour le terminal Tj et mettre en oeuvre un traitement d'annulation d'interférence. Ce faisant, le réseau réduit le débit du terminal Tj afin d'améliorer le débit du terminal Ti. Or, appliquer ce procédé sans précaution peut conduire à réduire de manière inacceptable le débit du terminal Tj afin de favoriser le terminal Ti, même si le débit somme reste supérieur au débit obtenu sans annulation d'interférence. De plus, appliquer ce procédé sans précaution peut conduire à réduire le débit somme des terminaux Ti et Tj par rapport celui qui serait obtenu sans annulation d'interférence.

Pour que le traitement SIC mis en oeuvre par le terminal T1 apporte le meilleur gain au débit somme, l'invention comporte la procédure suivante.

Etape 1 : Le réseau estime le débit atteignable pour chaque configuration de récepteurs possible pour les terminaux T1 et T2, noté $SR(Rx1,Rx2)$, où Rxi est le récepteur du terminal Ti, comme suit :

$$SR(IaN, IaN) = R\left(MCS\left[CQI_1^{1,IaN}\right]\right) + R\left(MCS\left[CQI_2^{2,IaN}\right]\right)$$

$$SR(SIC, IaN) = R\left(MCS\left[CQI_1^{1,SIC}\right]\right) + R\left(\min\left(MCS\left[CQI_1^{2,Agr}\right], MCS\left[CQI_2^{2,IaN}\right]\right)\right)$$

$$SR(IaN, SIC) = R\left(MCS\left[\min\left(CQI_2^{1,Agr}, CQI_1^{1,IaN}\right)\right]\right) + R\left(MCS\left[CQI_2^{2,SIC}\right]\right)$$

Dans cette équation, « $R(x)$ » dénote « le débit correspondant au MCS x », « IaN » dénote un récepteur IaN (par exemple MMSE), et « SIC » dénote un récepteur SIC.

Dans cette réalisation, nous ne considérons pas la situation où les deux terminaux mettent simultanément en oeuvre un récepteur SIC.

Etape 2 : la configuration de récepteurs sélectionnée est celle qui maximise le débit somme SR. Cette sélection peut s'exprimer mathématiquement comme :

$$\{Rx1, Rx2\} = \arg\max SR(.,.)$$

Les MCS sélectionnés pour les terminaux T1 et T2 sont déterminés par les récepteurs sélectionnées, comme :

$$\begin{cases} MCS_i = MCS\left[CQI_i^{i,IaN}\right] \\ MCS_j = MCS\left[CQI_j^{j,IaN}\right] \end{cases} \qquad \text{si } \{Rxi = IaN, Rxj = IaN\}$$

$$\begin{cases} MCS_i = MCS\left[CQI_i^{i,SIC}\right] \\ MCS_j = \min\left(MCS\left[CQI_i^{j,Agr}\right], MCS\left[CQI_j^{j,IaN}\right]\right) \end{cases} \qquad \text{si } \{Rxi = SIC, Rxj = IaN\}$$

Etape 3 : Le réseau notifie le terminal qui doit mettre en oeuvre un traitement SIC et notifie les terminaux des débits qui leurs sont respectivement alloués. Le réseau signale en outre au terminal qui doit mettre en oeuvre un traitement SIC, le débit alloué à l'interféreur.

La maximisation du débit somme peut être obtenue en contrôlant que le débit alloué au terminal IaN j ne soit pas diminué au profit du terminal SIC i au-delà d'un certain seuil. Un tel seuil peut par exemple être fixé à 10% du débit correspondant au $CQI_j^{j,IaN}$ .

La mise en oeuvre d'un procédé de signalisation pour effectuer ces notifications est décrite ci-après dans le contexte d'un réseau cellulaire de télécommunications mobiles LTE (Long Term Evolution) tel que défini par le 3GPP (Third Generation Partnership Project).

Dans un tel réseau, le terminal remonte au réseau un indicateur CQI de débit maximal (ou de manière équivalente de MCS maximal) que ce terminal peut recevoir. A partir de cet indicateur de débit remonté par un terminal, le point de transmission serveur ne modifie pas la puissance émise vers ce terminal mais adapte le MCS de ce terminal pour modifier le débit.

Le terminal évalue la qualité d'un canal en voie descendante (CQI) à l'aide de signaux de référence émis par les stations de base du réseau. Ces signaux de référence sont connus du terminal. En particulier, conformément à la version 11 des spécifications du LTE un terminal peut estimer la puissance de chacun des points de transmission en exploitant les ressources temps-fréquence CSI-RS (Channel State Information - Reference Signal) associées à ces points. En outre, des ressources temps-fréquence IMR (Interference Measurement Resource) sont configurables par le réseau pour effectuer la mesure de l'interférence.

Selon l'invention, le procédé de signalisation distingue plusieurs indicateurs de débit.

Un premier indicateur de débit, CQI IaN, noté $CQI_j^{j,IaN}$, où j est le numéro du terminal, correspond au débit maximal que le terminal Tj peut recevoir (sous entendu qu'il peut décoder) de son point de transmission serveur avec un traitement de réception sans annulation d'interférence. Pour déterminer ce $CQI_j^{j,IaN}$, le terminal Tj peut mesurer la puissance du signal reçu sur les ressources CSI-RS correspondant à son point de transmission serveur, et mesurer la puissance d'interférence reçue sur une ressource IMR configurée par le réseau pour refléter les conditions d'interférence moyennes courantes ; cette configuration peut par exemple être de telle sorte que le point de transmission serveur ne transmet pas sur cette ressource, tandis qu'elle est utilisée par les points de transmission interféreurs pour transmettre des données vers les terminaux qu'ils servent. Le rapport de la puissance de signal sur la puissance d'interférence peut être utilisé pour déduire le débit pouvant être reçu par le terminal n'ayant pas activé l'annulation d'interférence, par exemple à l'aide d'une table de correspondance formée à partir de mesures et stockée dans le terminal.

Selon une première réalisation particulièrement simple, le procédé de signalisation prend en compte deux terminaux T1 et T2. Le terminal T1 est servi par son point de transmission serveur C1 et interféré par le signal émis par le point de transmission interféreur C2 qui sert le terminal T2 ; seul un interféreur est considéré vis-à-vis du terminal T1. Le terminal T1 est configurable pour effectuer un traitement sans annulation d'interférence ou avec annulation d'interférence. De manière abrégée ce récepteur est dit SIC. Le terminal T2 lui ne peut mettre en oeuvre qu'un récepteur linéaire. Dans ce cas, le terminal T1 remonte un indicateur $CQI_1^{1,IaN}$ et le terminal T2 remonte un indicateur $CQI_2^{2,IaN}$, ces deux indicateurs étant calculés comme décrit ci-dessus.

Le procédé de signalisation selon l'invention considère dans ce cas un deuxième indicateur de débit, CQI SIC, noté $CQI_1^{1,SIC}$ et un troisième indicateur de débit, CQI Agresseur noté $CQI_1^{2,Agr}$ .

Le deuxième indicateur de débit $CQI_1^{1,SIC}$ correspond au débit maximal que le terminal T1 peut recevoir (sous entendu qu'il peut décoder) de son point de transmission serveur avec un traitement de réception avec annulation d'interférence. Pour déterminer ce $CQI_1^{1,SIC}$, le terminal T1 peut par exemple mesurer la puissance du signal reçu sur les ressources CSI-RS correspondant à son point de transmission serveur, mesurer la puissance d'interférence reçue du point de transmission interféreur C2 sur les ressources CSI-RS correspondant à ce point de transmission interféreur, et mesurer la puissance totale d'interférence reçue sur une ressource IMR configurée par le réseau pour refléter les conditions d'interférence moyennes courantes ; cette configuration peut par exemple être de telle sorte que le point de transmission serveur ne transmet pas sur cette ressource, tandis qu'elle est utilisée par les points de transmission interféreurs pour transmettre des données vers les terminaux qu'ils servent. En retranchant la puissance d'interférence reçue du point de transmission C2 de la puissance totale d'interférence, le terminal peut calculer la puissance d'interférence correspondant au cas où l'interférence du point de transmission C2 est parfaitement annulée. Le rapport entre la puissance du signal et cette dernière puissance d'interférence peut être utilisé pour déduire le débit pouvant être reçu par le terminal pour un récepteur avec annulation d'interférence activée, par exemple à l'aide de la table de correspondance utilisée pour calculer CQI IaN.

Le troisième indicateur de débit $CQI_1^{2,Agr}$ correspond au débit maximal que le terminal T1 peut recevoir (sous entendu qu'il peut décoder) du point de transmission interférent C2 avec un traitement de réception sans annulation d'interférence. Pour déterminer ce $CQI_1^{2,Agr}$, le terminal T1 peut par exemple mesurer la puissance du signal reçu sur les ressources CSI-RS correspondant au point de transmission interféreur C2, et mesurer la puissance d'interférence reçue sur une ressource IMR configurée par le réseau pour refléter des conditions d'interférence moyennes courantes où le point de transmission serveur C1 créée de l'interférence, mais pas le point de transmission interférent C2 puisqu'il est dans ce cas de figure le point serveur ; cette configuration peut par exemple être de telle sorte que le point de transmission interférent C2 ne transmet pas sur cette ressource, tandis qu'elle est utilisée par les autres points de transmission (y compris C1) pour transmettre des données vers les terminaux qu'ils servent. Le rapport de la puissance de signal sur la puissance d'interférence peut être utilisé pour déduire le débit pouvant être reçu par le terminal n'ayant pas activé l'annulation d'interférence, par exemple à l'aide de la table de correspondance utilisée pour calculer CQI IaN.

La remontée au réseau des indicateurs de débit peut s'effectuer de manière périodique ou apériodique. Le choix entre ces deux modes peut être guidé par une contrainte d'occupation de ressources radio.

Chaque terminal remonte ses CQI vers son point de transmission. Les deux points de transmission C1 et C2 sont contrôlés par une même station de base.

Selon un mode de réalisation, ces deux points de transmission peuvent alors être colocalisés. Une telle situation intervient par exemple avec des points de transmission qui contrôlent des secteurs différents créés à partir d'un même site radio. Dans ce cas, qui est fréquent, chaque point de transmission crée une cellule à l'aide d'antennes ayant une ouverture de 120°.

Dans un autre mode de réalisation, les deux points de transmission C1 et C2 sont localisés sur des sites radio distants. Dans ce cas, ils peuvent être des têtes radio déportées (RRH, Remote Radio Head) contrôlées par une même unité de traitement en bande de base (BBU, Baseband Unit).

L'entité qui contrôle les points de transmission C1 et C2, et donc connait les différents indicateurs remontés, détermine le débit somme SR maximal. Comme les indicateurs CQI remontés correspondent à des valeurs de débits, via des valeurs de MCS, la détermination du débit somme maximal peut consister à comparer les différents débits somme calculés :

$$SR(IaN, IaN) = R\big(MCS\big|CQI_1^{1,IaN}\big) + R\big(MCS\big|CQI_2^{2,IaN}\big)$$

$$SR(SIC, IaN) = R\big(MCS\big|CQI_1^{1,SIC}\big) + R\big(\min\big(MCS\big|CQI_1^{2,Agr}\big), MCS\big|CQI_2^{2,IaN}\big)\big)$$

pour identifier le maximum.

La manière d'obtenir le débit en fonction du MCS est décrite dans le document « 3GPP TS 36.213 Physical layer procedures » : le débit dépend à la fois du MCS et du nombre de ressources PRB allouées au terminal. Dans ce mode de réalisation, nous supposons que les mêmes ressources PRB sont allouées aux deux terminaux, et représentent la totalité de la largeur de bande du système. Le MCS correspondant à un CQI particulier peut être obtenu par le MCS donnant la même efficacité spectrale que ce CQI. Les efficacités spectrales des différents MCS peuvent être trouvées dans le document « R1-081638, Motorola, TBS and MCS Signaling and Tables, RAN1#52bis », tandis que les efficacités spectrales des CQI peuvent être trouvées dans le document 3GPP TS 36.213 précédemment cité.

Si le maximum correspond à *SR(IaN, IaN)*, ceci signifie qu'il n'y a pas de gain de débit au niveau du réseau en utilisant la capacité d'annulation d'interférence du terminal T1. Le débit à transmettre par le point de transmission serveur C$_j$ pour servir le terminal T$_j$ est alors donné par $R\left(MCS\left|CQI_j^{j,IaN}\right|\right)$. Dans ce cas, le réseau notifie le terminal T1 de ne pas activer le traitement SIC. Cette notification peut s'effectuer sous la forme du positionnement d'un bit dans un champ d'un canal de contrôle PDCCH.

Si le maximum correspond à SR(SIC,IaN), ceci signifie qu'il y a un gain de débit au niveau du réseau en utilisant la capacité d'annulation d'interférence du terminal T1. Dans ce cas, le réseau notifie ce terminal d'activer le traitement SIC. Cette notification peut s'effectuer sous la forme du positionnement d'un bit dans un champ d'un canal de contrôle PDCCH. Le débit à transmettre par le point de transmission serveur C$_1$ pour servir le terminal T1 est alors donné par $R\left(MCS\left|CQI_1^{1,SIC}\right|\right)$. SR(SIC,IaN) est le maximum des débits somme : SR(SIC,IaN)>SR(IaN,IaN). Pour le point de transmission serveur C$_2$, le débit à transmettre est donné par le minimum entre $MCS\left|CQI_1^{2,Agr}\right|$ et $MCS\left|CQI_2^{2,IaN}\right|$.

En effet, en fonction de la localisation des différents terminaux T1 et T2 entre eux et par rapport aux deux points de transmission serveurs, il se peut que le terminal T1 soit capable de recevoir le débit donné par $CQI_1^{2,Agr}$ mais pas le terminal T2.

Lorsque le réseau notifie le terminal T1 d'activer sa capacité d'annulation d'interférence, il lui communique en outre des informations pour lui permettre de décoder l'interféreur (l'identifiant RNTI du terminal T2 ainsi que ses paramètres de transmission tels que le MCS). Cette communication peut s'effectuer selon des techniques de signalisation décrites dans les demandes de brevet FR 13 524 53 et FR 13 524 55 du 19/03/13 au nom de France Télécom.

Selon une deuxième réalisation particulièrement simple, le procédé de signalisation prend en compte deux terminaux T1 et T2. Le terminal T1 est servi par son point de transmission serveur C1 et interféré par le signal émis par le point de transmission interféreur C2 qui sert le terminal T2 et inversement pour le terminal T2 ; deux interféreurs sont ainsi considérés, un vis-à-vis du terminal T1 et un vis-à-vis du terminal T2. Les terminaux T1 et T2 sont configurables pour effectuer un traitement sans annulation d'interférence ou avec annulation d'interférence. De manière abrégée ces récepteurs sont dits SIC. Le procédé de signalisation se déroule de manière similaire à ce qui a été décrit dans le cas de la première réalisation sauf que le terminal T2 remonte autant d'indicateurs de débit que le terminal T1. Le réseau calcule alors un troisième débit somme *SR(IaN, SIC)* comparable au deuxième débit somme :

$$SR\left(IaN,SIC\right) = R\left(MCS\left|\min\left(CQI_2^{1,Agr},CQI_1^{1,IaN}\right)\right|\right) + R\left(MCS\left|CQI_2^{2,SIC}\right|\right)$$

et la détermination d'un maximum s'effectue sur les trois débits somme.

De manière plus générale, le procédé peut s'appliquer à un réseau avec N points de transmission et N terminaux SIC. Considérons un exemple de réalisation où un terminal T1 servi par un point de transmission C1 est interféré par les signaux émis par deux points de transmission interféreurs, C2 et C3, servant les terminaux T2 et T3, respectivement. On suppose par ailleurs que l'interféreur reçu avec la plus grande puissance par le terminal T1 est le point de transmission C2 servant le terminal T2. Le terminal T1 est équipé d'un récepteur SIC activable, capable d'annuler les signaux de deux interféreurs ou bien un seul d'entre eux, tandis que les terminaux T2 et T3 ne possèdent que des récepteurs IaN. Les cas de figure suivants sont alors possibles pour la configuration des récepteurs.

1. Le terminal T1 utilise un récepteur IaN sans annulation d'interférence.
2. Le terminal T1 annule l'interférence du point de transmission C2 mais pas l'interférence du point de transmission C3.
3. Le terminal T1 annule l'interférence du point de transmission C2, puis l'interférence du point de transmission C3.
4. Le terminal T1 annule l'interférence du point de transmission C3 mais pas l'interférence du point de transmission C2.
5. Le terminal T1 annule l'interférence du point de transmission C3, puis l'interférence du point de transmission C2.

Chacun des cas de figure ci-dessus conduit à un débit particulier pour le terminal T1 et impose des conditions particulières sur les débits des terminaux T2 et T3, et demande donc de remonter des CQI particuliers. L'ordre de décodage des interféreurs qui maximise l'efficacité du processus d'estimation de l'interférence, et par là le débit du terminal T1, est de commencer par annuler l'interféreur reçu avec la puissance la plus élevée. Par conséquent, dans la suite de cet exemple de réalisation nous ne considérons que les cas 1 à 3, afin de limiter le nombre de CQI à remonter par le terminal T1.

Les CQI suivants doivent être remontés au réseau par le terminal T1 en fonction des cas de figure ci-dessus, en réutilisant les notations utilisées précédemment.

- Cas 1 : $CQI_1^{1,IaN}$
- Cas 2 :, $CQI_1^{1,SIC(2)}$, $CQI_1^{2,Agr-IaN}$
- Cas 3 : $CQI_1^{1,SIC(2,3)}$, $CQI_1^{2,Agr-IaN}$, $CQI_1^{3,Agr-SIC(2)}$

Dans les expressions ci-dessus, la notation « Agr-IaN » signifie que le signal agresseur est estimé à l'aide d'un récepteur IaN, tandis que la notation « Agr-SIC » signifie que le signal agresseur est estimé à l'aide d'un récepteur SIC. En outre, la notation « SIC(i,j) » signifie que le CQI est calculé en supposant que le récepteur SIC annule les signaux interférents des points de transmission Ci puis Cj (où i et j peuvent ici prendre les valeurs 2, 3).

En outre, chacun des terminaux T2 et T3 doivent remonter un CQI IaN, notés respectivement $CQI_2^{2,IaN}$ et $CQI_3^{3,IaN}$.

Pour que le réseau puisse choisir la configuration de récepteur qui maximise le débit somme de T1, T2 et T3, le terminal T1 doit ainsi renvoyer les 5 CQI suivants : $CQI_1^{1,IaN}$, $CQI_1^{1,SIC(2)}$, $CQI_1^{2,Agr-IaN}$, $CQI_1^{1,SIC(2,3)}$, $CQI_1^{3,Agr-SIC(2)}$. Les CQI $CQI_1^{1,IaN}$, $CQI_1^{1,SIC(2)}$, $CQI_1^{2,Agr-IaN}$ sont calculés par le terminal comme expliqué dans le cas d'un seul interféreur.

Le CQI $CQI_1^{1,SIC(2,3)}$ correspond au débit maximal que le terminal T1 peut recevoir (sous entendu qu'il peut décoder) de son point de transmission serveur avec un traitement de réception avec annulation d'interférence des points de transmission C2 et C3. Pour déterminer ce CQI, le terminal T1 peut par exemple mesurer la puissance du signal reçu sur les ressources CSI-RS correspondant à son point de transmission serveur, mesurer la puissance d'interférence reçue du point de transmission interféreur C2 sur les ressources CSI-RS correspondant à ce point de transmission interféreur, mesurer la puissance d'interférence reçue du point de transmission interféreur C3 sur les ressources CSI-RS correspondant à ce point de transmission interféreur et mesurer la puissance totale d'interférence reçue sur une ressource IMR configurée par le réseau pour refléter les conditions d'interférence moyennes courantes ; cette configuration peut par exemple être de telle sorte que le point de transmission serveur ne transmet pas sur cette ressource, tandis qu'elle est utilisée par les autres points de transmission pour transmettre des données vers les terminaux qu'ils servent. En retranchant la puissance d'interférence reçue du point de transmission C2 et celle reçue du point de transmission C3 de la puissance totale d'interférence, le terminal peut calculer la puissance d'interférence correspondant au cas où l'interférence des points de transmission C2 et C3 est parfaitement annulée. Le rapport entre la puissance du signal et cette dernière puissance d'interférence peut être utilisé pour déduire le débit pouvant être reçu par le terminal pour un récepteur avec annulation d'interférence activé pour annuler l'interférence de C2 et C3, par exemple à l'aide de la table de correspondance utilisée pour calculer CQI IaN.

Le CQI $CQI_1^{3,Agr-SIC(2)}$ correspond au débit maximal que le terminal T1 peut recevoir (sous entendu qu'il peut décoder) du point de transmission interférent C3 avec un traitement de réception avec annulation d'interférence du point de transmission C2. Pour déterminer ce CQI, le terminal T1 peut par exemple mesurer la puissance du signal reçu sur les ressources CSI-RS correspondant au point de transmission interféreur C3. Pour mesurer la puissance d'interférence, le terminal peut mesurer d'une part la puissance reçue sur une ressource IMR configurée par le réseau pour refléter des conditions d'interférence moyennes courantes où le point de transmission serveur C1 et le point de transmission interférent C2 créent de l'interférence, mais pas le point de transmission interférent C3 puisqu'il est dans ce cas de figure le point serveur ; cette configuration peut par exemple être de telle sorte que le point de transmission interférent C3 ne transmet pas sur cette ressource, tandis qu'elle est utilisée par les autres points de transmission (y compris C1 et C2) pour transmettre des données vers les terminaux qu'ils servent. D'autre part, le terminal mesure la puissance d'interférence reçue du point de transmission interféreur C2 à l'aide des ressources CSI-RS correspondant à ce point de transmission. En retranchant la puissance d'interférence reçue du point de transmission C2 de la puissance d'interférence mesurée sur la ressource IMR, le terminal peut calculer la puissance d'interférence correspondant au cas où l'interférence du point de transmission C2 est parfaitement annulée. Le rapport de la puissance de signal sur cette dernière puissance d'interférence peut être utilisé pour déduire le débit pouvant être reçu par le terminal ayant annulé l'interférence du point de transmission C2 pour détecter le signal émis par le point de transmission C3, par exemple à l'aide de la table de correspondance utilisée pour calculer CQI IaN.

Pour trouver la configuration de récepteur du terminal T1 qui maximise le débit somme, le réseau doit évaluer les débits sommes correspondant aux cas 1 à 3, donnés par :

$$SR(IaN, IaN, IaN) = R\left(MCS\left[CQI_1^{1,IaN}\right]\right) + R\left(MCS\left[CQI_2^{2,IaN}\right]\right) + R\left(MCS\left[CQI_3^{3,IaN}\right]\right)$$

$$SR(SIC(2), IaN, IaN) = R\left(MCS\left[CQI_1^{1,SIC(2)}\right]\right) + R\left(\min\left(MCS\left[CQI_1^{2,Agr-IaN}\right], MCS\left[CQI_2^{2,IaN}\right]\right)\right) + MCS\left[CQI_3^{3,IaN}\right]$$

$$SR(SIC(2,3), IaN, IaN) = R\left(MCS\left[CQI_1^{1,SIC(2,3)}\right]\right)$$
$$+ R\left(\min\left(MCS\left[CQI_1^{2,Agr-IaN}\right], MCS\left[CQI_2^{2,IaN}\right]\right)\right)$$
$$+ R\left(\min\left(MCS\left[CQI_1^{3,Agr-SIC(2)}\right], MCS\left[CQI_3^{3,IaN}\right]\right)\right)$$

On notera que les expressions des débits sommes $SR(IaN, IaN, IaN)$ et $SR(SIC(2), IaN, IaN)$ ci-dessus se déduisent des débits sommes $SR(IaN, IaN)$ et $SR(SIC, IaN)$ pour un seul interféreur, en leur ajoutant le débit du terminal T3 calculé pour un récepteur IaN.

Pour réduire encore le nombre de CQI à remonter, le réseau peut choisir de configurer le terminal pour ne remonter que les CQI correspondant aux cas 1 et 3, ce qui correspond à quatre CQI.

La configuration de récepteur du terminal T1 (IaN, SIC(2), ou SIC(2,3)) qui maximise le débit somme est celle qui conduit à la plus grande valeur de débit somme parmi celles-ci-dessus. Les MCS à allouer à chaque terminal se déduisent de cette configuration comme pour le cas d'un seul interféreur. Par exemple, si la configuration SIC(2,3) est sélectionnée, les MCS à allouer aux terminaux T1, T2, T3 sont donnés respectivement par :

$$MCS_1 = \left(MCS\left[CQI_1^{1,SIC(2,3)}\right]\right)$$

$$MCS_2 = \min\left(MCS\left[CQI_1^{2,Agr-IaN}\right], MCS\left[CQI_2^{2,IaN}\right]\right)$$

$$MCS_3 = \min\left(MCS\left[CQI_1^{3,Agr-SIC(2)}\right], MCS\left[CQI_3^{3,IaN}\right]\right)$$

Dans une variante où chaque terminal est équipé d'un récepteur SIC capable d'annuler deux interféreurs, chaque terminal i remonte les 5 CQI $CQI_i^{i,IaN}$, $CQI_i^{i,SIC(j)}$, $CQI_i^{j,Agr-IaN}$, $CQI_i^{i,SIC(j,k)}$, $CQI_i^{k,Agr-SIC(j)}$, où l'interféreur le plus puissant est le terminal j et le deuxième interféreur le plus puissant est le terminal k. Le réseau doit ensuite comparer les débits sommes correspondants aux différents cas de figure possibles de configuration des récepteurs. En supposant que les terminaux T2 et T3 ont tous deux pour interféreur dominant le point de transmission C1, ces cas de figure sont :

SR(IaN, IaN, IaN)
SR(SIC(2), IaN, IaN)
SR(SIC(2,3), IaN, IaN)
SR(IaN, SIC(1), IaN)
SR(IaN, SIC(1,3), IaN)
SR(IaN, IaN, SIC(1))
SR(IaN, IaN, SIC(1,2))

Chacun de ces débit sommes se calcule selon le principe expliqué ci-dessus dans le cas où seul le terminal T1 peut mettre en oeuvre une annulation d'interférence.

La configuration de récepteur des terminaux T1 T2 , T3 qui maximise le débit somme est celle qui conduit à la plus grande valeur de débit somme parmi celles-ci-dessus. Les MCS correspondants se déduisent de cette configuration comme dans le cas où seul le terminal T1 peut mettre en oeuvre une annulation d'interférence. [1] Bruno Clerckx, Heunchul Lee, Young-Jun Hong, and Gil Kim, "Rank Recommendation-based Coordinated Scheduling for Interference Mitigation in Cellular Networks" in Proc. IEEE Global Telecom. Conference (GLOBECOM' 11), Dec. 2011.

## Revendications

**1.** Procédé de signalisation, destiné à être mis en oeuvre par un réseau de télécommunication cellulaire (NW) comprenant une station de base (BS1) qui contrôle au moins un premier point de transmission (C1) qui sert un premier terminal (T1) avec récepteur à annulation d'interférence (SIC) activable, le premier terminal (T1) étant susceptible d'être interféré par un signal dit interférent destiné à un deuxième terminal (T2), le procédé de signalisation comprenant :

- une étape de remontée d'indicateurs depuis le premier terminal et le deuxième terminal au réseau comprenant pour un terminal un indicateur de débit maximal avec réception sans annulation d'interférence $(CQI_1^{1,IaN}, CQI_2^{2,IaN})$ due au signal interférentet comprenant en outre pour le premier terminal un indicateur de débit maximal de réception avec annulation d'interférence due au signal interférent $(CQI_1^{1,SIC})$ et un indicateur de débit maximal de réception du signal interférent $(CQI_1^{2,Agr})$

- une étape de détermination par le réseau de l'activation ou pas de l'annulation d'interférence par le premier terminal et des débits respectifs à allouer au premier et au deuxième terminaux en fonction des indicateurs remontés,
- une étape de notification par le réseau de l'activation ou pas de l'annulation d'interférence au premier terminal et des débits respectifs alloués au premier terminal et au deuxième terminal,
- une étape de signalisation du réseau au premier terminal du débit alloué au deuxième terminal.

2. Procédé de signalisation selon la revendication 1 dans lequel l'indicateur de débit maximal de réception du signal destiné au deuxième terminal $(CQI_1^{2,Agr})$ est déterminé sans annulation d'interférence en réception.

3. Procédé de signalisation selon la revendication 1 dans lequel l'indicateur de débit maximal de réception du signal destiné au deuxième terminal $(CQI_1^{2,Agr})$ est déterminé avec annulation d'interférence en réception.

4. Procédé de signalisation selon la revendication 1 destiné à être mis en oeuvre par un réseau de télécommunication cellulaire (NW) dans lequel le deuxième terminal est servi par un deuxième point de transmission différent du premier, procédé dans lequel la remontée d'indicateurs vers le réseau comprend :

- une remontée des indicateurs d'un terminal vers son point de transmission serveur,
- une étape de transmission des indicateurs des points de transmission vers la station de base.

5. Procédé de signalisation selon la revendication 1 destiné à être mis en oeuvre par un réseau de télécommunication cellulaire (NW) dans lequel en outre le deuxième terminal a un récepteur à annulation d'interférence (SIC) activable, procédé dans lequel :

- l'étape de remontée d'indicateurs comprend en outre pour le deuxième terminal un indicateur de débit maximal de réception avec annulation d'interférence due au signal destiné au premier terminal $(CQI_2^{2,SIC})$ et un indicateur de débit maximal de réception du signal destiné au premier terminal $(CQI_2^{1,Agr})$,
- l'étape de détermination par le réseau comprend la détermination de l'activation de l'annulation d'interférence par un ou aucun des terminaux avec récepteur à annulation d'interférence (SIC) activable,
- la notification par le réseau de l'activation ou pas de l'annulation d'interférence est faite aux terminaux avec récepteur à annulation d'interférence (SIC) activable,
- l'étape de signalisation du réseau comprend en outre une signalisation au deuxième terminal du débit alloué au premier terminal.

6. Programme d'ordinateur comportant des instructions pour l'exécution des étapes du procédé de signalisation selon l'une quelconque des revendications 1 à 5 lorsque ledit programme est exécuté par un ordinateur.

7. Support d'enregistrement lisible par un ordinateur sur lequel est enregistré un programme d'ordinateur comprenant des instructions pour l'exécution des étapes du procédé de signalisation selon l'une quelconque des revendications 1 à 5.

8. Station de base (BS1) d'un réseau de télécommunications cellulaire (NW), contrôlant au moins un premier point de transmission (C1) qui sert un premier terminal (T1) avec récepteur à annulation d'interférence (SIC) activable, le premier terminal (T1) étant susceptible d'être interféré par un signal dit interférent destiné à un deuxième terminal (T2), cette station de base comprenant :

- un module de réception d'indicateurs remontés depuis le premier terminal comprenant un indicateur de débit maximal avec réception sans annulation d'interférence ($CQI_1^{1,IaN}$) due au signal interférent, un indicateur de débit maximal de réception avec annulation d'interférence due au signal interférent ($CQI_1^{1,SIC}$), un indicateur de débit maximal de réception du signal interférent ($CQI_1^{2,Agr}$),
- un module de notification au premier terminal de l'activation ou pas de l'annulation d'interférence et de notification du débit alloué en fonction des différents indicateurs,
- un module de signalisation au premier terminal du débit alloué au deuxième terminal.

9.  Terminal (T1) avec récepteur à annulation d'interférence (SIC) activable, servi par un premier point de transmission (C1) d'un réseau de télécommunications cellulaire (NW), le point de transmission étant contrôlé par une station de base (BS1), ledit terminal étant susceptible d'être interféré par un signal dit interférent destiné à un deuxième terminal (T2), le terminal comprenant :

- un module pour remonter des indicateurs au réseau comprenant un indicateur de débit maximal avec réception sans annulation d'interférence ($CQI_1^{1,IaN}$) due au signal interférent, un indicateur de débit maximal de réception avec annulation d'interférence due au signal interférent ($CQI_1^{1,SIC}$), un indicateur de débit maximal de réception du signal interférent ($CQI_1^{2,Agr}$),
- un module de traitement de réception avec annulation d'interférence activable par un paramètre transmis par le réseau,
- un module de réception du débit alloué au terminal et déterminé par le réseau en fonction des indicateurs remontés,
- un module de réception d'une signalisation par le réseau d'un débit alloué au deuxième terminal.

10. Système (1) d'un réseau de télécommunications cellulaire (NW) comprenant :

- une station de base (BS1) contrôlant au moins un premier point de transmission (C1) du réseau de télécommunications cellulaire ;
- un premier terminal (T1) avec récepteur à annulation d'interférence (SIC) activable servi par le premier point de transmission susceptible d'être interféré par un signal dit interférent destiné à un deuxième terminal (T2),

cette station de base (BS1) comprenant :

- un module de réception d'indicateurs remontés depuis le premier terminal comprenant un indicateur de débit maximal avec réception sans annulation d'interférence ($CQI_1^{1,IaN}$) due au signal interférent, un indicateur de débit maximal de réception avec annulation d'interférence due au signal interférent ($CQI_1^{1,SIC}$), un indicateur de débit maximal de réception du signal interférent ($CQI_1^{2,Agr}$),
- un module de notification au premier terminal de l'activation ou pas de l'annulation d'interférence et de notification du débit alloué en fonction des différents indicateurs,
- un module de signalisation au premier terminal du débit alloué au deuxième terminal,

le terminal comprenant :

- un module pour remonter des indicateurs au réseau comprenant un indicateur de débit maximal avec réception sans annulation d'interférence ($CQI_1^{1,IaN}$) due au signal interférent, un indicateur de débit maximal de réception avec annulation d'interférence due au signal interférent ($CQI_1^{1,SIC}$), indicateur de débit maximal de réception du signal interférent ($CQI_1^{2,Agr}$),
- un module de traitement de réception avec annulation d'interférence activable par un paramètre transmis par le réseau,
- un module de réception du débit alloué au terminal et déterminé par le réseau en fonction des indicateurs remontés,
- un module de réception d'une signalisation par le réseau d'un débit alloué au deuxième terminal.

**Patentansprüche**

1. Verfahren zur Signalisierung, das dazu bestimmt ist, von einem zellularen Telekommunikationsnetz (NW) durchgeführt zu werden, das eine Basisstation (BS1) umfasst, welche wenigstens einen ersten Übertragungspunkt (C1) steuert, der ein erstes Endgerät (T1) mit Empfänger mit aktivierbarer Interferenzunterdrückung (SIC) bedient, wobei das erste Endgerät (T1) von einem "Interferenzsignal" genannten Signal gestört werden kann, das für ein zweites Endgerät (T2) bestimmt ist, wobei das Verfahren zur Signalisierung umfasst:

   - einen Schritt der Übermittlung von Indikatoren vom ersten Endgerät und vom zweiten Endgerät an das Netz, welche für ein Endgerät einen Indikator der maximalen Datenrate bei Empfang ohne Unterdrückung von Interferenz ($CQI_1^{1,IaN}$, $CQI_2^{2,IaN}$) infolge des Interferenzsignals umfassen und außerdem für das erste Endgerät einen Indikator der maximalen Datenrate des Empfangs mit Unterdrückung von Interferenz infolge des Interferenzsignals ($CQI_1^{1,SIC}$) und einen Indikator der maximalen Datenrate des Empfangs des Interferenzsignals ($CQI_1^{2,Agr}$) umfassen,
   - einen Schritt der Bestimmung, durch das Netz, der Aktivierung oder Nichtaktivierung der Interferenzunterdrückung durch das erste Endgerät und der jeweiligen Datenraten, die dem ersten und dem zweiten Endgerät zuzuweisen sind, in Abhängigkeit von den übermittelten Indikatoren,
   - einen Schritt der Benachrichtigung, durch das Netz, des ersten Endgeräts über die Aktivierung oder Nichtaktivierung der Interferenzunterdrückung und des ersten Endgeräts und des zweiten Endgeräts über die zugewiesenen jeweiligen Datenraten,
   - einen Schritt der Signalisierung der dem zweiten Endgerät zugewiesenen Datenrate durch das Netz an das erste Endgerät.

2. Verfahren zur Signalisierung nach Anspruch 1, wobei der Indikator der maximalen Datenrate des Empfangs des für das zweite Endgerät bestimmten Signals ($CQI_1^{2,Agr}$) ohne Interferenzunterdrückung beim Empfang bestimmt wird.

3. Verfahren zur Signalisierung nach Anspruch 1, wobei der Indikator der maximalen Datenrate des Empfangs des für das zweite Endgerät bestimmten Signals ($CQI_1^{2,Agr}$) mit Interferenzunterdrückung beim Empfang bestimmt wird.

4. Verfahren zur Signalisierung nach Anspruch 1, das dazu bestimmt ist, von einem zellularen Telekommunikationsnetz (NW) durchgeführt zu werden, wobei das zweite Endgerät von einem zweiten Übertragungspunkt bedient wird, der von dem ersten verschieden ist, wobei in diesem Verfahren die Übermittlung von Indikatoren an das Netz umfasst:

   - eine Übermittlung der Indikatoren von einem Endgerät an seinen Server-Übertragungspunkt,
   - einen Schritt der Übertragung der Indikatoren von den Übertragungspunkten zur Basisstation.

5. Verfahren zur Signalisierung nach Anspruch 1, das dazu bestimmt ist, von einem zellularen Telekommunikationsnetz (NW) durchgeführt zu werden, wobei außerdem das zweite Endgerät einen Empfänger mit aktivierbarer Interferenzunterdrückung (SIC) aufweist, wobei in dem Verfahren:

   - der Schritt der Übermittlung von Indikatoren außerdem für das zweite Endgerät einen Indikator der maximalen Datenrate des Empfangs mit Unterdrückung von Interferenz infolge des für das erste Endgerät bestimmten Signals ($CQI_2^{2,SIC}$) und einen Indikator der maximalen Datenrate des Empfangs des für das erste Endgerät bestimmten Signals ($CQI_2^{1,Agr}$) umfasst,
   - der Schritt der Bestimmung durch das Netz die Bestimmung der Aktivierung der Interferenzunterdrückung durch eines oder keines der Endgeräte mit Empfänger mit aktivierbarer Interferenzunterdrückung (SIC) umfasst,
- die Benachrichtigung durch das Netz über die Aktivierung oder Nichtaktivierung der Interferenzunterdrückung an die Endgeräte mit Empfänger mit aktivierbarer Interferenzunterdrückung (SIC) erfolgt,
- der Schritt der Signalisierung durch das Netz außerdem eine Signalisierung der dem ersten Endgerät zugewiesenen Datenrate an des zweite Endgerät umfasst.

6. Computerprogramm, welches Anweisungen zur Ausführung der Schritte des Verfahrens zur Signalisierung nach einem der Ansprüche 1 bis 5, wenn das Programm von einem Computer ausgeführt wird, umfasst.

7. Computerlesbares Aufzeichnungsmedium, auf dem ein Computerprogramm aufgezeichnet ist, welches Anweisungen zur Ausführung der Schritte des Verfahrens zur Signalisierung nach einem der Ansprüche 1 bis 5 umfasst.

8. Basisstation (BSI) eines zellularen Telekommunikationsnetzes (NW), welche wenigstens einen ersten Übertragungspunkt (C1) steuert, der ein erstes Endgerät (T1) mit Empfänger mit aktivierbarer Interferenzunterdrückung (SIC) bedient, wobei das erste Endgerät (T1) von einem "Interferenzsignal" genannten Signal gestört werden kann, das für ein zweites Endgerät (T2) bestimmt ist, wobei diese Basisstation umfasst:

   - ein Modul zum Empfang von vom ersten Endgerät übermittelten Indikatoren, welche einen Indikator der maximalen Datenrate bei Empfang ohne Unterdrückung von Interferenz $( CQI_1^{1,IaN} )$ infolge des Interferenzsignals, einen Indikator der maximalen Datenrate des Empfangs mit Unterdrückung von Interferenz infolge des Interferenzsignals $( CQI_1^{1,SIC} )$ und einen Indikator der maximalen Datenrate des Empfangs des Interferenzsignals $( CQI_1^{2,Agr} )$ umfassen,
   - ein Modul zur Benachrichtigung des ersten Endgeräts über die Aktivierung oder Nichtaktivierung der Interferenzunterdrückung und zur Benachrichtigung über die in Abhängigkeit von den verschiedenen Indikatoren zugewiesene Datenrate,
   - ein Modul zur Signalisierung der dem zweiten Endgerät zugewiesenen Datenrate an das erste Endgerät.

9. Endgerät (T1) mit Empfänger mit aktivierbarer Interferenzunterdrückung (SIC), das von einem ersten Übertragungspunkt (C1) eines zellularen Telekommunikationsnetzes (NW) bedient wird, wobei der Übertragungspunkt von einer Basisstation (BS1) gesteuert wird, wobei das Endgerät von einem "Interferenzsignal" genannten Signal gestört werden kann, das für ein zweites Endgerät (T2) bestimmt ist, wobei das Endgerät umfasst:

   - ein Modul zum Übermitteln von Indikatoren an das Netz, welche einen Indikator der maximalen Datenrate bei Empfang ohne Unterdrückung von Interferenz $( CQI_1^{1,IaN} )$ infolge des Interferenzsignals, einen Indikator der maximalen Datenrate des Empfangs mit Unterdrückung von Interferenz infolge des Interferenzsignals $( CQI_1^{1,SIC} )$ und einen Indikator der maximalen Datenrate des Empfangs des Interferenzsignals $( CQI_1^{2,Agr} )$ umfassen,
   - ein Modul zur Verarbeitung des Empfangs mit Interferenzunterdrückung, die durch einen durch das Netz übertragenen Parameter aktivierbar ist,
   - ein Modul zum Empfang der Datenrate, die dem Endgerät zugewiesen wurde und von dem Netz in Abhängigkeit von den übermittelten Indikatoren bestimmt wurde,
   - ein Modul zum Empfang einer Signalisierung, durch das Netz, einer dem zweiten Endgerät zugewiesenen Datenrate.

10. System (1) eines zellularen Telekommunikationsnetzes (NW), welches umfasst:

    - eine Basisstation (BS1), welche wenigstens einen ersten Übertragungspunkt (C1) des zellularen Telekommunikationsnetzes steuert;
    - ein erstes Endgerät (T1) mit Empfänger mit aktivierbarer Interferenzunterdrückung (SIC), das von dem ersten Übertragungspunkt bedient wird und von einem "Interferenzsignal" genannten Signal gestört werden kann, das für ein zweites Endgerät (T2) bestimmt ist,

    wobei diese Basisstation (BS1) umfasst:

- ein Modul zum Empfang von vom ersten Endgerät übermittelten Indikatoren, welche einen Indikator der maximalen Datenrate bei Empfang ohne Unterdrückung von Interferenz ($CQI_1^{1,IaN}$) infolge des Interferenzsignals, einen Indikator der maximalen Datenrate des Empfangs mit Unterdrückung von Interferenz infolge des Interferenzsignals ($CQI_1^{1,SIC}$) und einen Indikator der maximalen Datenrate des Empfangs des Interferenzsignals ($CQI_1^{2,Agr}$) umfassen,

- ein Modul zur Benachrichtigung des ersten Endgeräts über die Aktivierung oder Nichtaktivierung der Interferenzunterdrückung und zur Benachrichtigung über die in Abhängigkeit von den verschiedenen Indikatoren zugewiesene Datenrate,

- ein Modul zur Signalisierung der dem zweiten Endgerät zugewiesenen Datenrate an das erste Endgerät,

wobei das Endgerät umfasst:

- ein Modul zum Übermitteln von Indikatoren an das Netz, welche einen Indikator der maximalen Datenrate bei Empfang ohne Unterdrückung von Interferenz ($CQI_1^{1,IaN}$) infolge des Interferenzsignals, einen Indikator der maximalen Datenrate des Empfangs mit Unterdrückung von Interferenz infolge des Interferenzsignals ($CQI_1^{1,SIC}$) und einen Indikator der maximalen Datenrate des Empfangs des Interferenzsignals ($CQI_1^{2,Agr}$) umfassen,

- ein Modul zur Verarbeitung des Empfangs mit Interferenzunterdrückung, die durch einen durch das Netz übertragenen Parameter aktivierbar ist,

- ein Modul zum Empfang der Datenrate, die dem Endgerät zugewiesen wurde und von dem Netz in Abhängigkeit von den übermittelten Indikatoren bestimmt wurde,

- ein Modul zum Empfang einer Signalisierung, durch das Netz, einer dem zweiten Endgerät zugewiesenen Datenrate.

**Claims**

1. Signalling method, intended to be implemented by a cellular telecommunication network (NW) comprising a base station (BS1) which controls at least one first transmission point (C1) which serves a first terminal (T1) with activatable interference cancellation receiver (SIC), the first terminal (T1) being liable to suffer interference from a so-called interfering signal intended for a second terminal (T2), the signalling method comprising:

- a step of indicators feedback from the first terminal and the second terminal to the network comprising for a terminal an indicator of maximum bitrate with reception without cancellation of interference ($CQI_1^{1,IaN}, CQI_2^{2,IaN}$) due to the interfering signal and furthermore comprising for the first terminal an indicator of maximum bitrate of reception with cancellation of interference due to the interfering signal ($CQI_1^{1,SIC}$) and an indicator of maximum bitrate of reception of the interfering signal ($CQI_1^{2,Agr}$)

- a step of determination by the network of the activation or the non activation of the cancellation of interference by the first terminal and of the respective bitrates to be allocated to the first terminal and to the second terminal as a function of the indicators feedback,

- a step of notification by the network of the activation or the non activation of the cancellation of interference to the first terminal and of the respective bitrates allocated to the first terminal and to the second terminal,

- a step of signalling of the network to the first terminal of the bitrate allocated to the second terminal.

2. Signalling method according to Claim 1 in which the indicator of maximum bitrate of reception of the signal intended for the second terminal ($CQI_1^{2,Agr}$) is determined without cancellation of interference at reception.

3. Signalling method according to Claim 1 in which the indicator of maximum bitrate of reception of the signal intended for the second terminal ($CQI_1^{2,Agr}$) is determined with cancellation of interference at reception.

4. Signalling method according to Claim 1, intended to be implemented by a cellular telecommunication network (NW) in which the second terminal is served by a second transmission point different from the first, in which method the feedback of indicators to the network comprises:

- a feedback of the indicators of a terminal to its server transmission point,
- a step of transmitting the indicators of the transmission points to the base station.

5. Signalling method according to Claim 1, intended to be implemented by a cellular telecommunication network (NW) in which furthermore the second terminal has an activatable interference cancellation receiver (SIC), in which method:

- the step of feedback of indicators furthermore comprises for the second terminal an indicator of maximum bitrate of reception with cancellation of interference due to the signal intended for the first terminal $(CQI_2^{2,SIC})$ and an indicator of maximum bitrate of reception of the signal intended for the first terminal $(CQI_2^{1,Agr})$,
- the step of determination by the network comprises the determination of the activation of the cancellation of interference by one or none of the terminals with activatable interference cancellation receiver (SIC),
- the notification by the network of the activation or the non activation of the cancellation of interference is effected to the terminals with activatable interference cancellation receiver (SIC),
- the step of signalling of the network furthermore comprises a signalling to the second terminal of the bitrate allocated to the first terminal.

6. Computer program comprising instructions for the execution of the steps of the signalling method according to any one of Claims 1 to 5 when said program is executed by a computer.

7. Recording medium readable by a computer on which is recorded a computer program comprising instructions for the execution of the steps of the signalling method according to any one of Claims 1 to 5.

8. Base station (BS1) of a cellular telecommunications network (NW), controlling at least one first transmission point (C1) which serves a first terminal (T1) with activatable interference cancellation receiver (SIC), the first terminal (T1) being liable to suffer interference from a so-called interfering signal intended for a second terminal (T2), this base station comprising:

- a module for receiving indicators feedback from the first terminal comprising an indicator of maximum bitrate with reception without cancellation of interference $(CQI_1^{1,IaN})$ due to the interfering signal, an indicator of maximum bitrate of reception with cancellation of interference due to the interfering signal $(CQI_1^{1,SIC})$, an indicator of maximum bitrate of reception of the interfering signal $(CQI_1^{2,Agr})$,
- a module for notifying the first terminal of the activation or the non activation of the cancellation of interference and for notifying the bitrate allocated as a function of the various indicators,
- a module for signalling to the first terminal the bitrate allocated to the second terminal.

9. Terminal (T1) with activatable interference cancellation receiver (SIC), served by a first transmission point (C1) of a cellular telecommunications network (NW), the transmission point being controlled by a base station (BS1), said terminal being liable to suffer interference from a so-called interfering signal intended for a second terminal (T2), the terminal comprising:

- a module for indicators feedback to the network comprising an indicator of maximum bitrate with reception without cancellation of interference $(CQI_1^{1,IaN})$ due to the interfering signal, an indicator of maximum bitrate of reception with cancellation of interference due to the interfering signal $(CQI_1^{1,SIC})$, an indicator of maximum bitrate of reception of the interfering signal $(CQI_1^{2,Agr})$,
- a module for processing of reception with cancellation of interference activatable by a parameter transmitted by the network,
- a module for receiving the bitrate allocated to the terminal and determined by the network as a function of the indicators feedback,
- a module for receiving a signalling by the network of a bitrate allocated to the second terminal.

**10.** System (1) of a cellular telecommunications network (NW) comprising:

- a base station (BS1) controlling at least one first transmission point (C1) of the cellular telecommunications network;
- a first terminal (T1) with activatable interference cancellation receiver (SIC) served by the first transmission point liable to suffer interference from a so-called interfering signal intended for a second terminal (T2),

this base station (BS1) comprising:

- a module for receiving indicators feedback from the first terminal comprising an indicator of maximum bitrate with reception without cancellation of interference $(CQI_1^{1,IaN})$ due to the interfering signal, an indicator of maximum bitrate of reception with cancellation of interference due to the interfering signal $(CQI_1^{1,SIC})$, an indicator of maximum bitrate of reception of the interfering signal $(CQI_1^{2,Agr})$,
- a module for notifying the first terminal of the activation or the non activation of the cancellation of interference and for notifying the bitrate allocated as a function of the various indicators,
- a module for signalling to the first terminal the bitrate allocated to the second terminal,

the terminal comprising:

- a module for indicators feedback to the network comprising an indicator of maximum bitrate with reception without cancellation of interference $(CQI_1^{1,IaN})$ due to the interfering signal, an indicator of maximum bitrate of reception with cancellation of interference due to the interfering signal $(CQI_1^{1,SIC})$, an indicator of maximum bitrate of reception of the interfering signal $(CQI_1^{2,Agr})$,
- a module for processing of reception with cancellation of interference activatable by a parameter transmitted by the network,
- a module for receiving the bitrate allocated to the terminal and determined by the network as a function of the indicators feedback,
- a module for receiving a signalling by the network of a bitrate allocated to the second terminal.

Fig.1

Fig.2

**RÉFÉRENCES CITÉES DANS LA DESCRIPTION**

**Documents brevets cités dans la description**

- TR 36819
- FR 1352453
- FR 1352455

**Littérature non-brevet citée dans la description**

- **BRUNO CLERCKX ; HEUNCHUL LEE ; YOUNG-JUN HONG ; GIL KIM.** Rank Recommendation-based Coordinated Scheduling for Interference Mitigation in Cellular Networks. *Proc. IEEE Global Telecom. Conference (GLOBECOM' 11),* Décembre 2011